# EUROPEAN PATENT APPLICATION

(11) **EP 2 993 456 A1**
(43) Date of publication of application: **09.03.2016**
(21) Application number: 14183873.0
(22) Date of filing: 08.09.2014
(51) Int. Cl.: G01M 3/22

(54) **Method for selective pin-pointing of utility gas leaks during operation**

(71) Applicant: Inficon GmbH, 7310 Bad Ragaz (CH)
(72) Inventor: Enquist, Frederik, 583 36 Linköping (SE)
(74) Representative: von Kreisler Selting Werner - Partnerschaft von Patentanwälten und Rechtsanwälten mbB

(57) **Abstract**

A method for detecting the location of a gas leak 22 in a buried utility gas pipe 12 by measuring the presence of a gas 18 below or above the ground surface 14 above the pipe 12 is improved by injecting a tracer gas 18 into a utility gas 26 guided through the pipe during a mode of normal operation of the pipe and by using a gas detector 28 having a higher sensitivity to the tracer gas 18 than to the utility gas 26 for pin-pointing the leak position 22.

## Description

### Field of the invention

The present invention relates to a method for precise pin-pointing of leaks in underground gas pipes.

### Background of the invention

Regulations throughout the world require regular survey of gas networks to check for unknown leakage. The reason for this is primarily to protect the public from fires and explosions resulting from gas collecting in buildings and other confined spaces. The leak survey is typically carried out by moving a detector, sensitive to one of the main components of the gas, over the surface of the ground above the pipe carrying the gas.

If leakage is detected in an underground gas line, the location of the leak must be pin-pointed to reduce the excavation work to a minimum. This has long posed difficult problems for repair crews. Although the gas line itself is often located, the soil is often saturated with gas, which makes it difficult to pin-point the actual location of the leak. As a result, it is not uncommon for large stretches of a surface, including paved roadways, to require excavation to precisely locate the leak - a situation that can be costly, time consuming, and potentially hazardous.

The most common pin-pointing procedure on hard coated surfaces is roughly the following:
Probe holes are drilled through the hard cover at 1 to 2 m distance in the area where the gas leak was detected. The holes are drilled right above and along the route of the presumably leaking pipe.

The holes are left to ventilate for a while. A detector "sniffer" is placed in the holes and measures the gas concentration pumped out of the hole by the detector.

Further and more closely spaced holes are drilled around the hole or holes showing the highest concentration until the crew feel that accuracy is satisfactory or that better accuracy cannot be achieved.

There are two reasons for making the holes:
Reducing the influence of ground and surface conditions on the position of the highest concentration making it appear somewhere else than right above the actual leak, and
to allow venting out the gas from the soil so that the gas concentration profile is in a steady state and thereby improving precision of pin-pointing. To achieve a steady state situation it is vital that the holes are going most or all of the way down to the leaking pipe. It is also important that the holes are big enough to allow proper ventilation of the accumulated gas.

The process of drilling holes requires special equipment such as a drilling machine and a power source for the drill. The power source is typically either a compressed air unit or an electric power generator. In either case it adds to the complexity of the whole operation.

In addition to the time and effort spent there are also two serious risks involved:
When drilling a whole there is a risk that a large amount of gas is released that could be ignited by sparks formed when drilling or by some other ignition source, and
the pipe may be damaged from the drilling which can cause substantial leakage with associated fire and explosion risks.

The current method is time consuming and not as accurate as desired. The main reason for the limited accuracy is that the leak is typically rather old meaning the gas has had time to spread quite a bit sideways. Typically gas is detected in an area stretching 5 to 20 meters along the route of the pipe. Considerable larger areas are often encountered and it is also common that gas is detected not directly above the pipe but instead beside the pipe at the edge of the road or sidewalk or along the curb. This also means that it is quite common to find more than one gas area from one leak.

Typical accuracy using the probe hole procedure is +/- 2 m but it is common that two or more holes show peak concentrations forcing the crew to dig in the wrong place or to dig more than would be necessary if more accurate pin-pointing was possible.

US 5,063,772 A discloses a method for detecting the location of a gas leak in a gas-lift well. A tracer gas is injected into the well and external leakage is detected by recording the expected delay in gas pulse migration to a sampling and detection point. The tracer gas is detected inside the pipe as it is tapped at a location downstream of the leak position. The method thus needs two access points to the well, namely one for injecting the tracer gas and the other one for tapping a portion of the fluid for analysis of tracer content. The accuracy of the estimation of the leak position depends on several parameters including distance between the injection point and the tapping point, temperature, dimension stability and tolerance of the piping and atmospheric pressure.

FR 2 304 911 A1 describes a leak detection method in which a tracer gas is applied to the outside of a utility gas pipe and sucked into the pipe and detected therein. The gas pipe needs to leave the mode of normal operation in which the utility gas is transported and needs to enter the leak detection mode in which a vacuum is established within the pipe while no utility gas is transported.

WO 2005/036100 A2 describes a method for locating leaks in pipelines using tracers. The method is also not applied during normal operation, i.e. not during transport of utility gas through the pipeline. Timing of gas pulses running inside the pipe and detected at a second extraction point is used as the indicator to calculate the location. This method cannot be employed during normal operation of the pipeline when utility gas is transported.

WO 2004/113862 A1 discloses a method for leak detection in contaminated environments. The container which is tested is filled with a tracer gas and the presence of tracer gas outside of the object is detected.

### Summary of the invention

It is an object of the present invention to provide an improved method for pinpointing leaks in buried gas pipes by injecting a tracer gas in the pipe shortly before performing the pin-pointing operation.

This is achieved in accordance with the characterizing portion of claim 1.

The method of the invention employs use of a tracer gas for leak detection. The tracer gas is injected into the utility gas within the pipe during normal operation of the pipe, i.e. when the pipe is in service and utility gas is transported through the pipe. Utility gas transport is not interrupted for the leak detection. The tracer gas is injected into the pipe at a first position and the probe measurement for leak detection is performed almost instantly, i.e. within hours of the injection, at a second position downstream of the pipe while the pipe is in normal service guiding utility gas there through. A gas detector is then used which has a higher sensitivity to the tracer gas than to the utility gas. This means that the gas detector would not be disturbed by the higher concentration of utility gas present in case of a leak. The gas detector is used to pinpoint the leak position by testing gas above the ground surface. Small amounts of tracer gas which has escaped through a leak and ascended through the soil towards and through the ground surface can be detected close to and above the ground surface with the gas detector. Detection of tracer gas is a strong indication that a pipe directly below the gas detector comprises a leak.

Unlike the prior art leak detection methods for buried utility gas pipelines, the utility gas transport through the pipe does not have to be stopped in order to perform the leak pinpointing procedure. The tracer gas can be injected into the pipe together with the utility gas at the same position, namely at the entrance of the pipe or at any suitable access point upstream of the suspected leak area. The accuracy of locating a leak is independent of the total length of the pipe, the pressure, the temperature and the pipe dimension. The accuracy rather only depends on ground conditions and is typically better than +/- 0,5 m and typically within +/- 0,2 m.

By injecting a tracer gas into the leaking pipe for which there is a selective and sensitive detector pin-pointing the leak will become more accurate and considerably easier to perform as the gas will not have time to spread widely in the ground before the pin-pointing work begins.

This is achieved by following phenomena:
The spread of the added gas is minimal as it started leaking just recently (hours before pin-pointing).

The two most advantageous tracer gases to use are hydrogen and helium. There are selective detectors for both these gases. The addition of helium would reduce the energy content of the gas and hence affect the efficiency of the appliances using the gas.

By choosing hydrogen the influence on the utility gas will be minimal and there are suitable selective detectors on the market. Hydrogen readily rises to the surface and penetrates most surface layers without the need for drilling probe holes. This behaviour of hydrogen has been utilized extensively by telecom organisations around the world since over 25 years. Traditional copper telephone cables, buried in the ground, are normally pressurised with dry air to prevent water ingress in case of damages to the cable sheath. This will result in air leaking out instead of water penetrating into the cable. If leaks are too big, however, they need to be found and repaired. By injecting a diluted hydrogen mixture it is possible to precisely locate such damage by searching the surface above the cable in the way described in this document. The typical accuracy of locating such leaks is less than one meter and mostly within +/-0.5 meters.

The method according to the present invention requires the use of a highly selective detector that will react much stronger to the added tracer gas than to the gas originally in the pipe. The selectivity factor should preferably be several orders of magnitude for optimal employment of this method. Detectors with this quality are manufactured and sold by INFICON AB in Sweden. The selectivity of this detector for hydrogen as compared to methane is more than 5 orders of magnitude.

Furthermore, the need for drilling probe holes will be greatly reduced when employing the present invention.

The method further requires access to suitable injection points which are possible points for connecting and injecting the tracer gas into the pipe.

Using a lighter than air tracer gas is preferable as the light atoms or molecules will ascend faster through the soil above the pipe towards the ground surface.

An embodiment of the invention is described with reference to the drawings.
- Fig. 1: shows the arrangement for performing the method of the invention under use of mere tracer gas,
- Fig. 2: shows the tracer gas concentration at the surface,
- Fig. 3: shows the arrangement of Fig. 1 by use of mere utility gas without tracer gas,
- Fig. 4: shows the utility gas concentration profile at the surface,
- Fig. 5: shows the arrangement according to Fig. 1 by use of a utility gas and the tracer gas of the invention and
- Fig. 6: shows the gas concentrations at the surface.

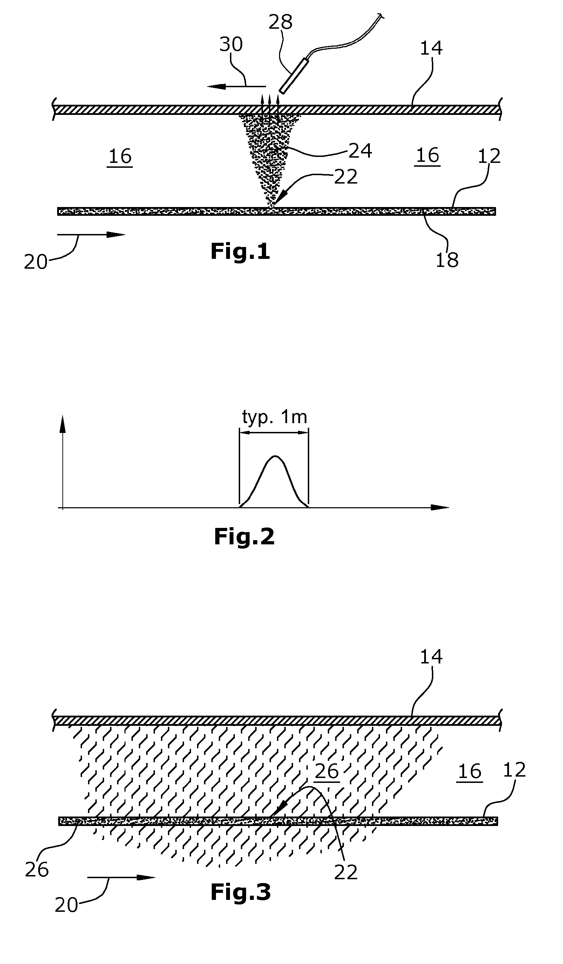

Fig. 1 shows a gas pipe 12 below the surface 14 of the ground 16. The pipe 12 is thus entirely surrounded by ground material 16. The pipe 12 is positioned below the ground surface 14.

The pipe 12 carries the tracer gas 18 in the direction of arrow 20 in Fig. 1. The pipe 12 contains a tracer gas 18 only and no utility gas 26. The tracer gas 18 enters the pipe 12 upstream of the leak 22 and exits the pipe 12 through the leak 22.

Fig. 1 shows how the tracer gas 18 spreads out of the leak 22 and within the ground 16. A fairly narrow plume 24 of tracer gas 18 forms within the soil. The plume 24 is very narrow at the leak position 22 and expands until it reaches the ground surface 14.

Fig. 2 shows the tracer gas concentration at the surface 14. It can be realized that the diameter of the tracer gas concentration at the surface 14 is about one meter. This is typical in the case of hydrogen and helium. The diameter of the tracer gas plume 24 at the surface 14 will increase over time. Therefore, it is desirable to perform the leak detection or pin-pointing shortly after introduction of the tracer gas 18 to the pipe 12.

Fig. 3 shows the case where the pipe 12 only carries a utility gas 26 but no tracer gas 18. The gas is carried in the direction of arrow 20 in Fig. 3. This is not an embodiment of the invention, but rather shown for illustration purposes. The utility gas 26 will exit the pipe 12 at the position of the leak 22 and it will expand throughout the surrounding ground material 16 in an area which is much wider than the area of the tracer gas plume 24 in Fig. 1.

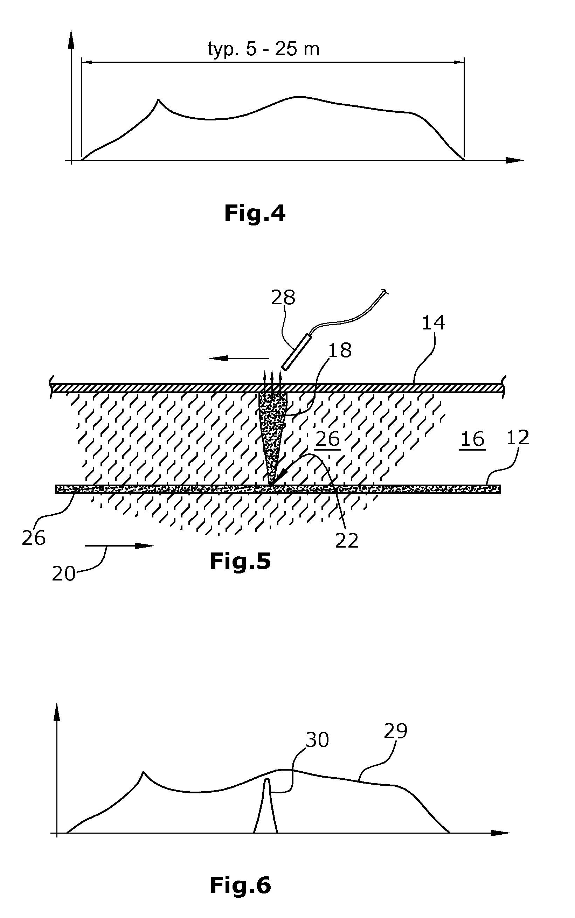

Fig. 4 shows an example of the concentration profile of the utility gas 26 at the surface 14 which will form according to Fig. 3. The leaking utility gas 26 will form a cloud within the ground 16 and reach an outer diameter typically in the range between 5 and 25 meters at the surface 14. It can be immediately realized that it will be very hard and imprecise to detect the position of the leak 22 only from measuring the gas 18 at the surface 14. Several spots with concentration peaks are commonly found depending on the conditions of the soil and top coating (cracks etc).

Fig. 5 now shows the embodiment of the invention where the pipe 12 carries a utility gas 26 such as methane and a tracer gas 18 such as preferably hydrogen or helium. The utility gas 26 is guided through the pipe 12 during normal operation, i.e. during transportation of the utility gas through the pipe. The tracer gas 18 is additionally injected during transportation of the utility gas 26. Fig. 5 shows that both the utility gas 26 and the tracer gas 18 escape from the leak 22 into the ground 16. The ground 16 is saturated with a large volume of utility gas 26 which expands within a very large area of the ground surface 14, as explained above with regard to Figs. 3 and 4.

The hydrogen or helium tracer gas 18, however, ascends within the ground 16 from the leak 22 up to the surface 14 without expanding as much as the utility gas 26. The tracer gas 18 is detected with a sniffing probe 28 above the surface 14. The sniffing probe 28 is at least ten times more sensitive to the tracer gas 28 than to the utility gas 26.

Fig. 6 shows the concentration profile on the surface 14 of the utility gas 26 and of the tracer gas 18.

When using the gas detector 28 according to the method of the invention which is much more sensitive to the tracer gas 18 than to the utility gas 26, the gas detector 28 will selectively detect the tracer gas 18 within its much more narrow expansion area 30 at the surface 14 compared to the expansion area 29 of the utility gas 26. Consequently, the possible position of the leak 22 of the gas pipe 12 can be found within a considerably smaller area when using the method of the invention compared to leak detection methods which require detecting the utility gas 26 at the ground surface 14.

## Claims

1. Method for detecting the location of a gas leak (22) in a buried utility gas pipe (12) by measuring the presence of a gas (18) below or above the ground surface (14) above the pipe (12),
**characterized in that**
a utility gas is guided through the pipe in a mode of normal operation of the pipe (12),
a tracer gas (18) is injected into the utility gas (26) within the pipe (12) during the mode of normal operation, and
a gas detector (28) having a higher sensitivity to the tracer gas (18) than to the utility gas (26) is used to pin-point the leak position (22).

2. The method according to claim 1, wherein the tracer gas (18) is lighter than air.

3. The method according to claim 1 or 2, wherein the tracer gas (18) is hydrogen.

4. The method according to claim 1 or 2, wherein the tracer gas (18) is helium.

5. The method according to one of claims 1 - 4, wherein the gas detector (28) is at least ten times more sensitive to the tracer gas (18) than to the utility gas (26).

6. The method according to one of the preceding claims, wherein the gas detector (28) is at least a hundred times more sensitive to the tracer gas (18) than to the utility gas (26).

7. The method according to one of the preceding claims, wherein the gas detector (28) is at least a thousand times more sensitive to the tracer gas (18) than to the utility gas (26).

8. The method according to one of the preceding claims, wherein the tracer gas (18) is at least ten thousand times more sensitive to the tracer gas (18) than to the utility gas (26).

9. The method according to one of the preceding claims, wherein the tracer gas (18) is injected into the gas pipe (12) upstream of the assumed leak (22).

10. The method according to one of the preceding claims, wherein the tracer gas (18) is injected into the gas pipe (12) such that the pressure within the gas pipe (12) is higher than atmosphere.

11. The method according to one of the preceding claims, wherein the tracer gas (18) is injected no longer than 48 hours before performing the leak detection.

12. The method according to one of the preceding claims, wherein the tracer gas (18) is injected into the pipe (12) no longer than 18 hours and, preferably, no longer than 12 hours before performing the leak detection.

13. The method according to one of the preceding claims, wherein the tracer gas (18) is injected into the pipe (12) at least 30 minutes and no longer than 8 hours before performing the leak detection.
